# EUROPEAN PATENT APPLICATION

(11) **EP 3 855 044 A1**
(43) Date of publication of application: **28.07.2021**
(21) Application number: 18934516.8
(22) Date of filing: 21.09.2018
(51) Int. Cl.: F16F 15/12

(54) **TORQUE TRANSMISSION MEMBER AND CENTERING TOOL FOR CENTERING ASSEMBLY OF TORQUE TRANSMISSION MEMBER**

(71) Applicant: Schaeffler Technologies AG & Co. KG, 91074 Herzogenaurach (DE)
(72) Inventor: XU, Chen, Shanghai 201800 (CN)
(86) International application number: PCT/CN2018/106993
(87) International publication number: WO 2020/056732

(57) **Abstract**

The present invention relates to a torque transmission member for transmitting torque between a first rotating member and a second rotating member. The torque transmission member has a first connection part and a second connection part which are concentrically arranged and fixedly connected with each other, wherein the first connection part is fixedly connected to the first rotating member, the second connection part is connected to the second rotating member in a torsion-proof manner, and the second connection part has a central hole for receiving the second rotating member, wherein, a cylindrical centering reference member is provided, the torque transmission member and the centering reference member are coaxially arranged by a centering tool during the process of assembling the torque transmission member, wherein the first connection part is provided with at least two through holes, and the centering tool passes through the through holes during a process of centering. The present invention further relates to a centering tool for coaxially arranging the above-mentioned torque transmission member and a fixed cylindrical centering reference member, wherein the centering tool has at least two centering arms, wherein the centering arms are capable of passing through the through holes.

## Description

### Technical Field

The present invention relates to a torque transmission member for transmitting torque between two rotating members. The present invention further relates to a centering tool for coaxially arranging the torque transmission member and a fixed centering reference member.

### Background

A hybrid vehicle refers to a vehicle with a vehicle drive system composed of two or more individual drive systems that can operate simultaneously. The vehicle is powered by a hybrid power assembly with at least two power units. A hybrid vehicle comprising a P2 hybrid module is known from CN 104890497 A, wherein a motor is located between an engine and a transmission, i.e., position P2, and the motor is in disconnection or torsion-proof connection with front and rear stages by a clutch device.

A torque transmission member such as a hub can be used to transmit power between the P2 hybrid module and the transmission. The torque transmission member has a first connection part and a second connection part which are concentrically arranged and fixedly connected with each other, the first connection part is provided as an input end connecting to a drive unit, and the second connection part can be connected to a transmission input shaft in a torsion-proof manner by a central hole thereof. Furthermore, the first connection part of the torque transmission member can be fixedly connected to a flexible disc which is known, for example, from CN 103216572 B, so that the power generated by the motor in the P2 hybrid module is transmitted to the torque transmission member through the flexible disc, thereby reducing torsional vibration and improving driving comfort. Therefore, it is necessary to accurately and coaxially arrange the flexible disc and the P2 hybrid module.

In the prior art, generally, the centering assembly of a flexible disc and a torque transmission member such as a hub is implemented in a well-known manner, and then the torque transmission member and the P2 hybrid module are coaxially arranged by a centering tool. Generally, a housing of an actuation device in the P2 hybrid module is set as a centering reference member of the torque transmission member. During the assembly process, the torque transmission member and the centering reference member are coaxially arranged relative to existing centering tools by means of form fitting, thereby implementing the centering of the torque transmission member.

However, because the axial distance between the housing of the actuation device and the torque transmission member is limited or because of the position interference from other parts, the existing centering tool can be used only when the inner diameter of the central hole of the torque transmission member is greater than the outer diameter of the cylindrical centering reference member, otherwise, the centering tool cannot achieve a form fit with both the torque transmission member and the centering reference member during the process of centering. In order to save the arrangement space in the transmission or to reduce the manufacturing cost, it is necessary to design the transmission input shaft to be smaller, more precisely, to design the diameter of the transmission input shaft to be smaller. If the inner diameter of the central hole (on the torque transmission member) corresponding to the input shaft is less than the outer diameter of the centering reference member, the existing centering tool cannot be used, and thus the torque transmission member and the P2 hybrid module cannot be accurately and coaxially arranged. Therefore, in the prior art, the design of the input shaft is greatly limited.

### Summary

Therefore, the technical problem to be solved by the present invention is to provide an improved torque transmission member and a correspondingly improved centering tool, wherein the torque transmission member and a fixed cylindrical centering reference member can be coaxially arranged by using the centering tool when the inner diameter of the central hole of the torque transmission member is less than the outer diameter of the centering reference member.

The above-mentioned technical problem is solved by a torque transmission member for transmitting torque between a first rotating member and a second rotating member. The torque transmission member has a first connection part and a second connection part which are concentrically arranged and fixedly connected with each other, wherein the first connection part is fixedly connected to the first rotating member, the second connection part is connected to the second rotating member in a torsion-proof manner, and the second connection part has a central hole for receiving the second rotating member. A cylindrical centering reference member is provided and is preferably fixed relative to a housing, and the torque transmission member and the centering reference member are coaxially arranged by the centering tool during the process of centering the torque transmission member. According to the present invention, the first connection part is provided with at least two through holes, the centering tool passes through the through holes during the process of centering the torque transmission member, so that the centering tool enables the torque transmission member and the centering reference member to be arranged in a centered manner. Within the scope of the present invention, the first rotating member may be a centrally symmetrical component, preferably a return member, and particularly preferably a disc-shaped return member as a whole. The second rotating member may be a shaft or a component with a shaft portion. The torque transmission member is a component such as a hub that transmits torque. The first connection part of the torque transmission member is a centrally symmetrical component, preferably a return member, and particularly preferably a return member having the shape of a ring or a disc. The second connection part of the torque transmission member is a centrally symmetrical component with a central hole, preferably a return member with a central hole, and particularly preferably a sleeve. The centering reference member of the torque transmission member may be, for example, a cylindrical section of a device housing, and the outer circumference surface thereof is used as a centering reference. According to the present invention, when assembling the torque transmission member, the centering tool at least partially passes through the at least two through holes provided on the first connection part, so that the centering tool can achieve a form fit with both the torque transmission member and the centering reference member when the inner diameter of the central hole of the torque transmission member is less than the outer diameter of the centering reference member, and thus the torque transmission member and the centering reference member are coaxially arranged.

In a preferred embodiment, a distance between geometric centers of the through holes and a central axis of the torque transmission member is equal, and the through holes are distributed evenly on the first connection part along the circumferential direction. Therefore, the impact of the through holes on local stress of the torque transmission member is reduced as far as possible. In addition, it is necessary to properly design the size of the through hole, so that on the one hand, the centering tool, especially a centering arm of the centering tool, can pass through the through hole easily, and on the other hand, the local strength of the torque transmission member can be prevented from being too low. Advantageously, the distance between the geometric center of the through hole and the central axis of the torque transmission member is equal to the outer diameter of the centering reference member. This helps to easily manufacture corresponding centering tools for assembling the torque transmission member. For example, the centering tool has centering arms, and since the distance between the through hole and the central axis is equal to the outer diameter of the centering reference member, the centering arms and the outer circumference of the centering reference member can be in a lap joint after the centering arms passing through the through hole in a straight line.

In another preferred embodiment, the through holes are kidney-shaped. That is, the contour of the through hole is streamlined, and such an contour with a gradually changing curvature radius is favorable for reducing the degree of stress concentration on the torque transmission member.

In another preferred embodiment, the first connection part is provided with a boss, and the through holes are provided on the boss. Therefore, a stress concentration coefficient is reduced by local thickening. Advantageously, the axial thickness of the boss is in the range of 7 mm to 21 mm. Particularly advantageously, the axial thickness of the boss is 14 mm. When the pass design of the through hole is proper, setting the axial thickness of the boss to 14 mm can make the local stress at the through hole of the torque transmission member basically equal to the local stress at the corresponding position of the existing torque transmission member.

In another preferred embodiment, the first connection part is provided with at least two bolt holes for bolted connection with the first rotating member. Advantageously, the bolt holes are evenly distributed on the first connection part.

In another preferred embodiment, the central hole of the second connection part is provided with a female spline for splined connection with the second rotating member.

In addition, the above-mentioned technical problem is also solved by a centering tool. The centering tool is used to coaxially arrange the torque transmission member and the fixed cylindrical centering reference member. According to the present invention, the centering tool has at least two centering arms, wherein the centering arms are capable of passing through the above-mentioned through holes. Particularly, the number of the centering arms can be the same as the number of the through holes on the first connection part. Advantageously, one end of each of the centering arms is provided with a radial positioning surface matching with the centering reference member, and the other end of each of the centering arms are fixedly connected with each other indirectly or directly. The radial positioning surface is, for example, an arc surface extending circumferentially. The centering tool is clamped onto the outer circumference contour of the centering reference member via the radial positioning surface of each centering arm, so that the centering tool does not move radially relative to the centering reference member. Additionally, an axial positioning surface can also be provided at one of the centering arm's end clamped onto the centering reference member, so that the torque transmission member can be positioned in the axial direction when the first rotating member is assembled to, for example, a hybrid module.

In one preferred embodiment, the centering tool further has a centering cylinder, and the outer diameter of the centering cylinder is equal to the inner diameter of a central hole of the second connection part of the torque transmission member. The centering arms are fixedly connected with the centering cylinder respectively at the end thereof on which no centering reference surface is provided. In this case, if a connection structure, such as a female spline, for connecting with the second rotating member in a torsion-proof manner is disposed in the central hole, the inner diameter of the central hole is equal to the diameter of an inner envelope circle of the connection structure. Therefore, the centering arms can be provided at the radial outer side of the centering cylinder, and the positions of the geometric centers of the centering arms relative to the outer circumference of the centering cylinder respectively correspond to the positions of the geometric centers of the through holes relative to the inner circumference or inner envelope circle of the central hole. Particularly, the centering cylinder can be arranged in parallel with the centering arm. During the assembly process, the centering cylinder is extended into the central hole of the torque transmission member, so that the centering tool and the hub are coaxially arranged. Moreover, the centering arms can respectively pass through the through holes and extend to the centering reference member, so that the centering tool and the centering reference member are coaxially arranged via the radial positioning surface.

In a special embodiment, the outer circumference contour of the centering arm can be matched to the shape of the through hole, thereby directly defining the radial movement between the centering tool and the torque transmission member. In combination with the radial positioning surface of the centering arm, the torque transmission member and the fixed cylindrical centering reference member can be coaxially arranged.

### Brief Description of the Drawings

Preferred embodiments of the present invention will be schematically illustrated below with reference to drawings. Drawings are as follows:
FIG. 1 is a sectional view of a centering assembly process of a hub and a hybrid module according to a preferred embodiment of the present invention;
FIG. 2 is a perspective view of the hub according to FIG. 1;
FIG. 3 is a front view of the hub according to FIG. 1;
FIG. 4 is a side view of the hub according to FIG. 1; and
FIG. 5 is a perspective view of a centering tool according to a preferred embodiment of the present invention.

In different drawings, the same reference numerals are used for identical or functionally identical components.

### Detailed Description

A torque transmission member according to a preferred embodiment of the present invention is designed to be a hub 2 used in a hybrid vehicle. The hybrid vehicle particularly has a P2 hybrid module and further comprises an engine, a transmission, etc., wherein the hub 2 is particularly used for transmitting torque between the P2 hybrid module and the transmission.

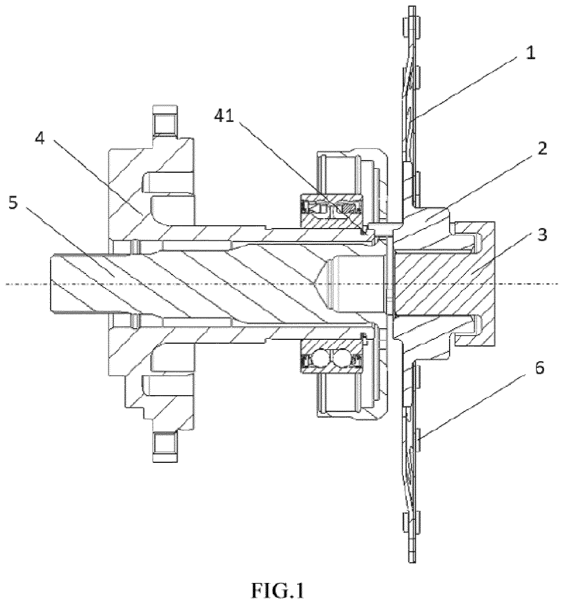

FIG. 1 shows a sectional view of the hub 2 and the P2 hybrid module during centering assembly. As shown in FIG. 1, the P2 hybrid module has an axis of rotation and comprises a motor, a clutch, an electric central actuation device (EZA), a flange shaft 5, etc. A hub flexible disc 1 is driven by a rotor (not shown) of the motor. The hub 2 is connected to a component via the flexible disc 1, wherein the component transmits power of the motor rotor, and the hub 2 is connected to a transmission input shaft (not shown) in a torsion-proof manner, thereby transmitting the power of the motor to the transmission input shaft (not shown) via the flexible disc 1 and the hub 2. The flexible disc 1, the hub 2 and the hybrid module are arranged on a common axis of rotation, wherein the flexible disc 1 and the hub 2 are centered by for example, a central hole of the hub 2, and the concentric arrangement of the hub 2 and the hybrid module is implemented by a centering tool 3 according to the embodiment of the present invention, wherein a cylindrical shoulder 41 at an end of an EZA housing 4 can be selected as a centering reference member.

The hub 2 and the centering tool 3 according to a preferred embodiment of the present invention will be described below in detail.

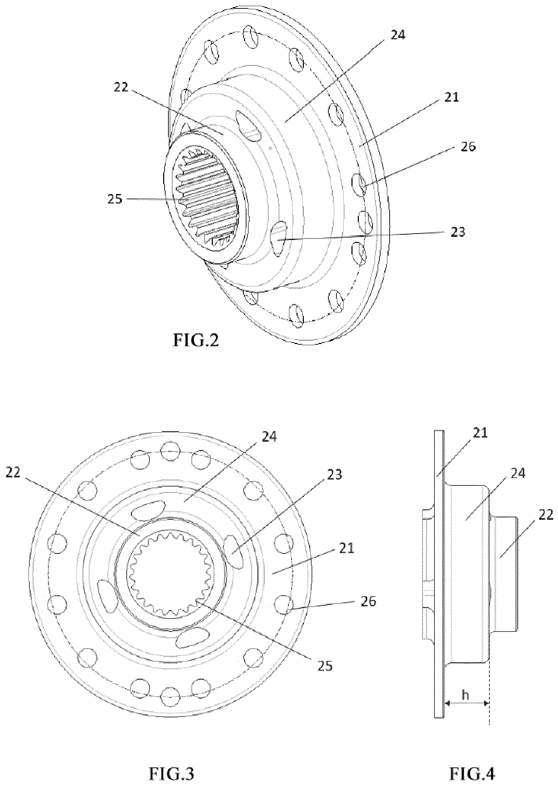

FIGs. 2, 3 and 4 respectively show a perspective view, a front view and a side view of the hub according to FIG. 1. It can be seen from these three figures that the hub 2 has a first connection part 21 and a second connection part 22 which are concentrically arranged and fixedly connected with each other. The first connection part 21 is used for bolted connection with the flexible disc 1. The first connection part 21 is an annular plate, and a plurality of bolt holes 26 are uniformly provided on the first connection part 21. Each of the bolt holes 26 allows a bolt 6 (visible in FIG. 1) to pass through, wherein the bolt 6 connects the flexible disc 1 to the hub 2. The second connection part 22 is used for connecting with the transmission input shaft in a torsion-proof manner. The second connection part 22 has a central hole for receiving the transmission input shaft after centering assembly, and a female spline 25 is disposed on the inner circumference of the central hole for splined connection with the transmission input shaft. Therefore, torque is transmitted between the flexible disc 1 and the transmission input shaft through the hub 2. In addition, the diameter of the central hole of the second connection part 22 (more precisely, the diameter of the inner envelope circle of the female spline 25 of the hub 2) is less than the outer diameter of the cylindrical shoulder 41 used as the centering reference member.

A boss 24 extending axially is provided on the first connection part 21 of the hub 2, wherein the boss 24 is annular as a whole. As shown in FIG. 4, an axial thickness h of the boss 24 is preferably in the range of 7∼21 mm, particularly preferably 14 mm. The boss 24 is provided with four through holes 23 through which the centering arms 32 of the centering tool 3 pass. The distance between geometric centers of the four through holes 23 and the central axis of the hub 2 is equal, and the four through holes 23 are distributed evenly along the circumferential direction. As shown in FIG. 3, the four through holes 23 are kidney-shaped, that is, the contours thereof are streamlined, and the circumferential direction of the through holes are respectively widened along the circumferential direction.

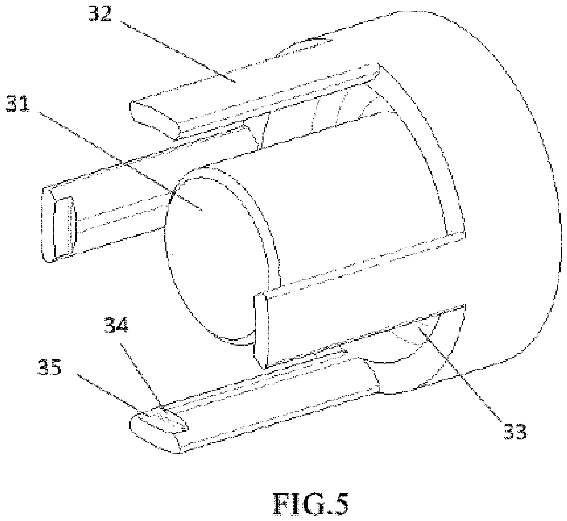

FIG. 5 shows a perspective view of the centering tool 3 according to a preferred embodiment of the present invention. The centering tool 3 has a centering cylinder 31, four centering arms 32, and a connection structure 33 for connecting the centering cylinder 31 to the centering arms 32. The diameter of the centering cylinder 31 is the same as the diameter of the envelope circle of the female spline 25 of the central hole of the second connection part 22, so that when the centering cylinder 31 is extended into the central hole, the hub 2 cannot move radially relative to the centering tool 3. The four centering arms 32 are arranged in parallel with the centering cylinder 31, and are all distributed evenly at the radial outer side of the centering cylinder 31, and the position of each centering arm 32 relative to the centering cylinder 31 corresponds to the position of each through hole 23 relative to envelope circle of the female spline 25 of the central hole. Therefore, the four centering arms 32 are equally spaced, and the distance between the four centering arms 32 and the envelope circle of the female spline 25 is equal. One end of each centering arm 32 has an axial positioning surface 34 and a radial positioning surface 35 for being clamped onto the cylindrical shoulder 41. The other end of each centering arm 32 (namely the end without a positioning surface) is connected to the centering cylinder 31 through the connection structure 33. The centering arms 32 can pass through the corresponding through holes 23 and be clamped onto the cylindrical shoulder 41 by means of the axial positioning surface 34 and the radial positioning surface 35, so that the centering tool 3 cannot move radially relative to the housing 4 of the electric central actuation device, thereby implementing the concentric arrangement of the hub 2 and the hybrid module, and defining the position of the centering tool 3 on one side along the axial direction.

Therefore, by means of the centering tool 3 according to a preferred embodiment of the present invention, the flexible disc 1, the hub 2 according to a preferred embodiment of the present invention and the hybrid module can be coaxially arranged by completing the following steps:
1) connecting the flexible disc 1 to the hub 2 by bolts;
2) installing the centering tool 3 onto the hub 2, wherein the centering cylinder 31 is extended into the central hole of the second connection part 22, and each centering arm 32 passes through the corresponding through hole 23 on the first connection part 21;
3) clamping each centering arm 32 of the centering tool 3 onto the centering reference member 41;
4) connecting the flexible disc 1 to the component that transmits power of the motor rotor; and
5) removing the centering tool 3.

Although possible embodiments have been described illustratively in the above description, it should be understood that there are still a large number of embodiment variations through combinations of all known technical features and embodiments as well as those are readily apparent to those skilled in the art. In addition, it should be further understood that the exemplary embodiments are just examples and shall not in any way limit the scope of protection, application and construction of the present invention. Through the foregoing description, it's more about to providing those skilled in the art a technical guide for converting at least one exemplary embodiment, in which various changes, especially changes in the functions and structures of the components, can be made as long as they do not depart from the scope of protection of the claims.

### LIST OF REFERENCE NUMERALS

- 1: First rotating member, flexible disc
- 2: Torque transmission member, hub
- 21: First connection part
- 22: Second connection part
- 23: Through hole
- 24: Boss
- 25: Female spline
- 26: Bolt hole
- 3: Centering tool
- 31: Centering cylinder
- 32: Centering arm
- 33: Connection structure
- 34: Axial positioning surface
- 35: Radial positioning surface
- 4: Housing of an electric central actuation device
- 41: Centering reference member, cylindrical shoulder
- 5: Flange shaft
- 6: Bolt
- H: Thickness of the bos

## Claims

1. A torque transmission member (2) for transmitting torque between a first rotating member (1) and a second rotating member, wherein the torque transmission member (2) has a first connection part (21) and a second connection part (22) which are concentrically arranged and fixedly connected with each other, wherein the first connection part (21) is fixedly connected to the first rotating member (1), the second connection part (22) is connected to the second rotating member in a torsion-proof manner, and the second connection part (22) has a central hole for receiving the second rotating member,
wherein a cylindrical centering reference member (41) is provided, the torque transmission member (2) and the centering reference member (41) are coaxially arranged by a centering tool (3) during the process of centering the torque transmission member (2), wherein the first connection part (21) is provided with at least two through holes (23), and the centering tool (3) passes through the through holes (23) during the process of centering.

2. The torque transmission member (2) according to claim 1, wherein a distance between geometric centers of the through holes (23) and a central axis of the torque transmission member (2) is equal, and the through holes (23) are evenly distributed on the first connection part (21) along the circumferential direction.

3. The torque transmission member (2) according to claim 2, wherein the distance is equal to the outer diameter of the centering reference member (14).

4. The torque transmission member (2) according to claim 1, wherein the through holes (23) are kidney-shaped.

5. The torque transmission member (2) according to claim 1, wherein the first connection part (21) is provided with a boss (24), and the through holes (23) are provided on the boss (24).

6. The torque transmission member (2) according to claim 5, wherein an axial thickness (h) of the boss (24) is in the range of 7 mm to 21 mm.

7. The torque transmission member (2) according to claim 1, wherein the first connection part (21) is provided with at least two bolt holes (26) for bolted connection with the first rotating member (1).

8. The torque transmission member (2) according to claim 1, wherein the central hole of the second connection part (22) is provided with a female spline (25) for splined connection with the second rotating member.

9. A centering tool (3) for coaxially arranging the torque transmission member (2) according to any one of claims 1 to 8 and a fixed cylindrical centering reference member (41), wherein the centering tool (3) has at least two centering arms (32), wherein the centering arms (32) are capable of passing through the through holes (23) according to any one of claims 1 to 8.

10. The centering tool (3) according to claim 9, wherein the centering tool (3) further has a centering cylinder (31), and the outer diameter of the centering cylinder (31) is equal to the inner diameter of the central hole of the second connection part (22) of the torque transmission member (2).
